# EUROPEAN PATENT APPLICATION

(11) **EP 1 372 024 A1**
(43) Date of publication of application: **17.12.2003**
(21) Application number: 02360172.7
(22) Date of filing: 12.06.2002
(51) Int. Cl.: G02F 1/1333

(54) **Liquid crystal optical phase modulator**

(71) Applicant: ALCATEL, 75008 Paris (FR)
(72) Inventor: Wessel, Dr. Rudolf, 70372 Stuttgart (DE); Bülow, Dr. Henning, 70806 Kornwestheim (DE); Pfeiffer, Dr. Thomas, 70569 Stuttgart (DE); Berroth, Prof. Dr.-Ing Manfred, 70550 Stuttgart (DE)
(74) Representative: Rausch, Gabriele, Dr.

(57) **Abstract**

An inclusion of liquid crystal in the direct vicinity of the core of an optical waveguide structured on a substrate allows to build a tunable optical device. The liquid crystal will replace part of the cladding material of that integrated structure. The tuning of the optical property of that liquid crystal, i.e. its refractive index, will influence directly the mode index of the core. This influence can be of such amount to allow the control the flow of optical signals transmitted through it. The tuning is advantageously achieved by applying an electric field via electrodes to the liquid crystals.

## Description

This invention relates to an optical device comprising at least an optical waveguide core for the transmission of optical signals. Such kind of optical devices possibly made as integrated optical circuits are particularly developed for telecommunications systems especially for a wavelength division multiplexing communication system.

A phase modulator or shifter is a basic building block in a large variety of integrated circuits or Planar Lightwave Devices PLD. It is about a set up allowing to act on a controlled way on some phases of optical signals. This is achieved by a controlled change of the refractive index through which these optical signals are transmitted. Usually, this change is performed on an optical waveguide using electro-optical or thermo-optical effects.

Electro-optical phase modulators are polarization dependent and require high voltage or long waveguide structures. This implies a too high optical losses. Furthermore, the electro-optic effect is limited to a few materials, which are more expensive than SiO₂ used usually in this field. Moreover, it is difficult to build up very compact devices. Thermo-optic phase modulators are realized by depositing thin film heaters on the cladding. They are not very reliable or too expensive due to the fact that such devices consume a high electrical power. They need a typical switching power of 0.5W. This power can be reduced by a factor of up to 10 by etching the cladding and buffer besides the optical waveguide, using high index contrast waveguide and thick buffer layer below the waveguide. But, this makes the fabrication process of the phase modulator more complicated. It is necessary for some integrated optical circuits to use a certain number of such phase shifter either in cascade (e.g. Polarization Moden Dispersion PMD compensator) or in parallel (e.g. Variable Optical Attenuator VOA array) where the flow of optical signals can be controlled. In such cases, the power consumption of the whole circuit is rising to several Watts or even more.

Another function of such phase shifter is the so-called wave plate. It is based on a high anisotropy of the mode index of the optical waveguide along a segment implying a differentiate influence on the different components from an optical signal transmitted through it. The length of that segment is chosen according to the wavelength of the optical signal to be treated and to the wished effect e.g. an half or quarter wave plate for the rotation respectively about 180° or 90° of the corresponding polarization vector. Wave plate on PLD are realized by cutting a trench through the waveguide and inserting a film like polymide. Such wave plates are not tunable and suffer from radiation losses. The insertion of such a film is not adapted to mass production.

Also known are mechanical influences on fibers by stretching it. The physical size of its core is changed along a segment allowing a more or less controlled modification of some phases from optical signals transmitted through it (fiber strechers are phase shifters - stress along the fibre - as well as waveplates - stress perpendicular to it -). An alternative also based on the use of a fiber is described in the article from EI-Sherif et al. published in SPIE **722,** 59 (1986). It consists by replacing the passive cladding material on a small part of the fiber core by an active one. This is obtained using a nematic liquid crystal as an active clad material of a multimode fiber over a short length. If the index of the cladding and the modified cladding are matched, the device will exhibit no insertion loss. When an external electric field is applied to this electro-optical material, the index of the modified cladding changes, leading to new boundary conditions for the light propagated inside the fiber.

In US 6,154,591 is described a tunable optical device comprising a substrate and a superstrate such that first and second optical waveguides are sandwiched between said substrate and said superstrate so as to define a space between said waveguides. This space is adapted to act as an optical resonant cavity by filling it with a liquid crystal material to permit to tune said cavity. This is obtained by some alignment means disposed on at least one of the substrate and the superstrate such that the liquid crystal are orientated to respond to an applied electric field.

A liquid crystal phase modulator can be used in all applications where the polarization dependence is not crucial or is evaded by polarization splitting. If the phase modulator is integrated in a Mach-Zehnder waveguide interferometer, an amplitude modulator is realized (e.g. array of 40 variable optical attenuators consuming very low power). Dispersion equalizers and polarization mode dispersion compensators are typical application due to the usual requirement of a whole series of phase modulators. The phase shifters are especially suited for the PMD compensator where phase shifting is performed only in one polarization.

Phase modulation is required in tunable integrated optical filters. There is a strong demand for tunable filters with low power consumption particularly in metro and in access optical network. The integration of thermo-optical phase shifters with temperature sensitive devices (e.g. array waveguide grating, AWG) is difficult, because local heating leads to an increase of the chip temperature. Liquid crystal phase shifters allow this integration since nearly no electrical power is needed for the liquid crystal phase modulator. The realization of tunable waveplates allows the development of an integrated optical polarization controller. Moreover, the integration of a lambda half plate in the middle of an integrated optical chip can be used to realize polarization independent devices. Normally, the polarization dependence due to the anisotropy structure of the liquid crystal molecules induces a strong birefringence. With the combination of the half waveplate with two polarization dependent phase modulators, a polarization independent phase modulator can be realized.

But, it is very difficult to integrate the liquid crystals on planar lightwave circuits because they can not be structured using photolithography to obtain waveguides. Moreover, the optical losses essentially on the transition from the passive waveguide to the active waveguide as described in US 6,154,591 are too large (in the order of dB/cm).

It is an object of the present invention to achieve an optical device with a segment showing a reversible high index change along the transmission of optical signals without implying high power consumption. Furthermore, it is an aim to develop such kind of optical device while being relatively cheap to manufacture.

Advantageously, an inclusion of the liquid crystal in the direct vicinity of the core of an optical waveguide structured on a substrate allows to build a tunable optical device. The liquid crystal will be confined by replacing cladding material of that integrated structure. The tuning of the property of that liquid crystal i.e. its refractive index will influence directly the mode index of the core. This influence can be of such amount to allow to control the flow of optical signals transmitted through it. The tuning is advantageously achieved by applying some electric field via electrode on a segment of that core confined with liquid crystals.

According to the choice of the configuration for the molecules building up the liquid crystal i.e. the choice of the liquid crystal director respective to the optical axis, it is possible to realize different tunable devices. Therefore, a phase modulator or controllable wave plate or even a combination of both can be developed following the present invention.

Further advantageous features of the invention are defined in the dependent claims and will become apparent from the following description and the drawings.

One embodiment of the invention will now be explained in more detail with reference to the accompanying drawings, in which:
Fig. 1a and 1b show a cross section of two different configurations of an integrated optical device according to the present invention;
Fig. 2 shows side views and cross sections of a configuration according to fig. 1b without and with a voltage applied on the liquid crystals;
Fig. 3 shows two cross sections of a configuration according to fig. 1b without and with a voltage applied on the liquid crystals;
Fig. 4 shows a top view of an optical device according to the present invention realized as a compact integrated switch.

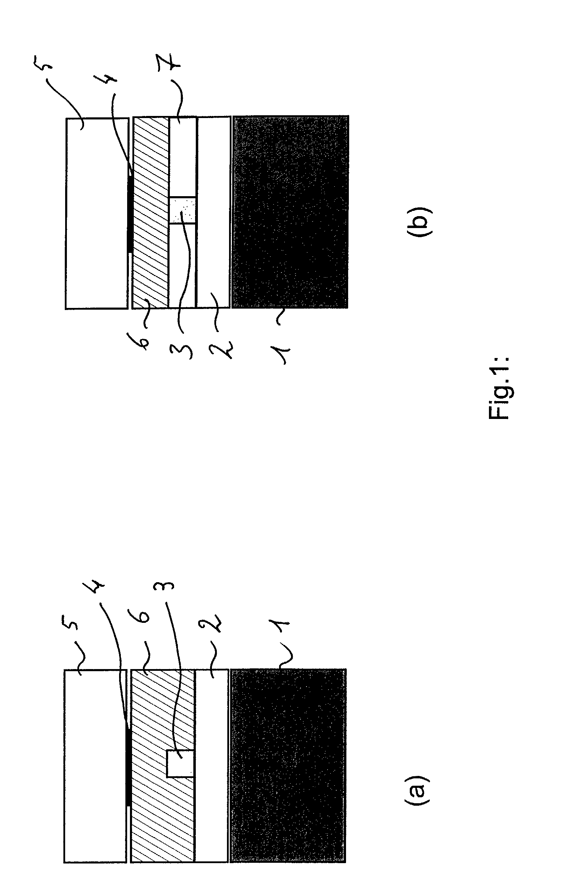

On figures 1 a and 1b are shown a cross section of two configurations of an optical device according to the present invention. The core 3 of an optical waveguide is structured as usual using e.g. photolitography on some buffer 2 (e.g. made out of SiO₂-material) itself grown on some substrate (e.g. made out of Si-material). The present invention consists by substituting the standard waveguide cladding 7 (e.g. SiO₂) surrounding the core 3 by some Liquid Crystal LC 6. This is performed on the three sides - fig. 1a - or only on the top or upper side - fig 1 b - along a defined segment of that core 3. Above the LC 6 are placed some electrodes e.g. by etching process. The whole is covered by some glass 5 as a protection and a supplementary confinement.

This build two basic configurations are possible. On figure 1a the cladding is completely substituted by the LC. The second configuration shown on fig. 1b is advantageous for the integration in standard planar lightwave circuit waveguides. They can be fabricated as follow: after fabricating the standard PLC platform a part of the cladding 2 is removed by (RIE) etching. The liquid crystal is filled 6 and orientated. Afterwards a glass substrate 5 with the upper electrodes 4 is fixed on the top. The configuration of fig. 1b requires a more complicated etching process. The upper electrode 4 is mounted together with the glass cover 5 above the LC 6. For both cases, it is the buffer 1 (Si) which is also used as the lower electrode.

The mode index is changed by the change of the refractive index of the cladding material substituted now at least partly with LC. The influence of this change can be adjusted by the waveguide design. For instance, a decrease of the waveguide width leads to an enlarged mode field with a higher field amplitude in the cladding material. If a smaller variation of the mode index is required broader waveguides can be used and the standard SiO₂-cladding should take a larger part of the waveguide surrounding (see configuration shown on fig. 1b). The effect of the LC can be also reduced by performing the etching step not up to top of the core but leaving some thin SiO₂ cladding layer above the waveguide.

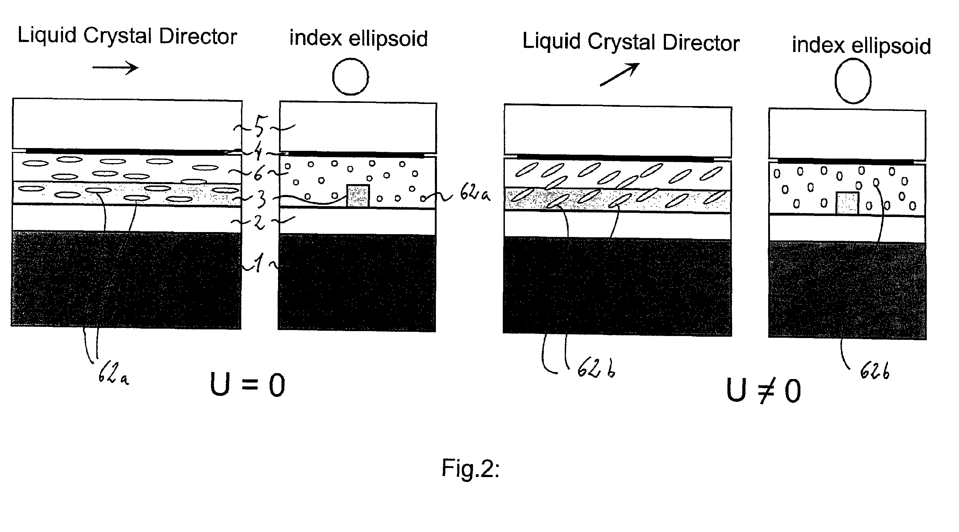

The two different applications i.e. phase modulator and controllable waveplate can be realized by a different orientations of the LC molecules 62a, 62b, 63a, 63b (liquid crystal director). On figure 2 is shown the case of an optical device optimized to act as a phase modulator. The liquid crystal (molecules 62a) along the segment of the optical waveguide shows a liquid crystal director in absence of external field to be parallel to the optical axis of said optical waveguide. The molecules 63a are orientated parallel to the optical waveguide. Without a voltage, the index ellipsoid has the same direction parallel to the waveguide. So, birefringence B (=n_{TM}-n_{TE}, with n_{TM} and n_{TE} the refractive index respectively for the TM and TE components of an optical signal vector at a specific wavelength) is small. The index ellipsoid is almost isotropic (n_{TM}≈n_{TE}). When the external field is applied, it will act on said liquid crystal by tilting its liquid crystal director along a plane parallel to said optical axis. The molecules 62b rotate due to the electric field. Essentially only the refractive index for the TM-polarized light is changed, the index ellipsoid becoming more elongated on that direction (n_{TM}>n_{TE}).

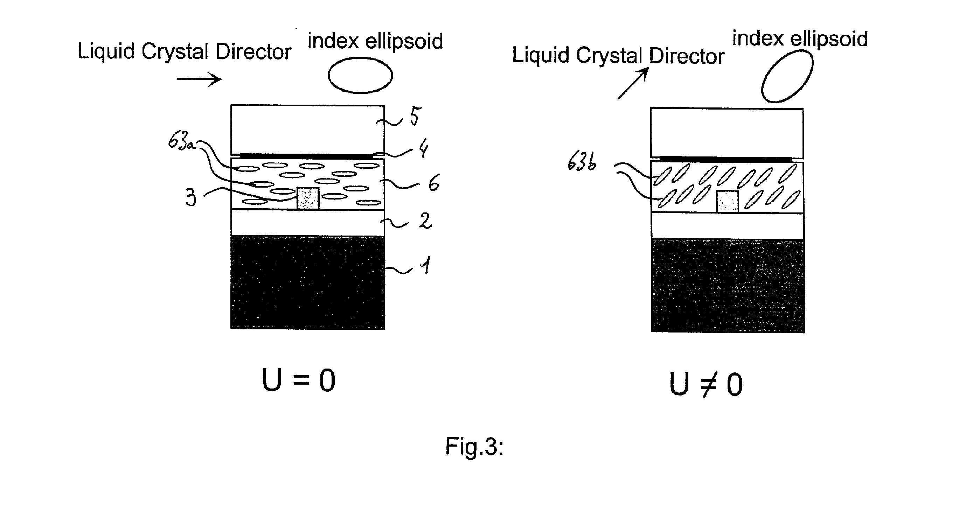

A second configuration regarding the orientation of the liquid crystal is shown on figure 3 where the LC molecules 63a have a liquid crystal director in absence of external field to be perpendicular to the optical waveguide. This is more adapted for an optical device acting as a controllable waveplate. In this case, the waveguide birefringence is becoming larger. When the external field is applied, it will act on said liquid crystal by tilting the molecules 63b i.e. its liquid crystal director along a plane perpendicular to said optical axis. The orientation of the LC molecules and in this way the orientation of the waveplate can be controlled by the voltage.

The length of the segment from the optical waveguide where the core is surrounded by the LC is defined according to the polarization control to be performed with it on an optical signal (e.g. its center wavelength) to be transmitted through said optical waveguide. This length defined respective to the optical signal (center wavelength) will fixe the property (modification ratio on that center wavelength) of the corresponding wave plate. With the right waveguide length, quarter waveplates and half waveplates can be realized and combined to a fully polarization controller.

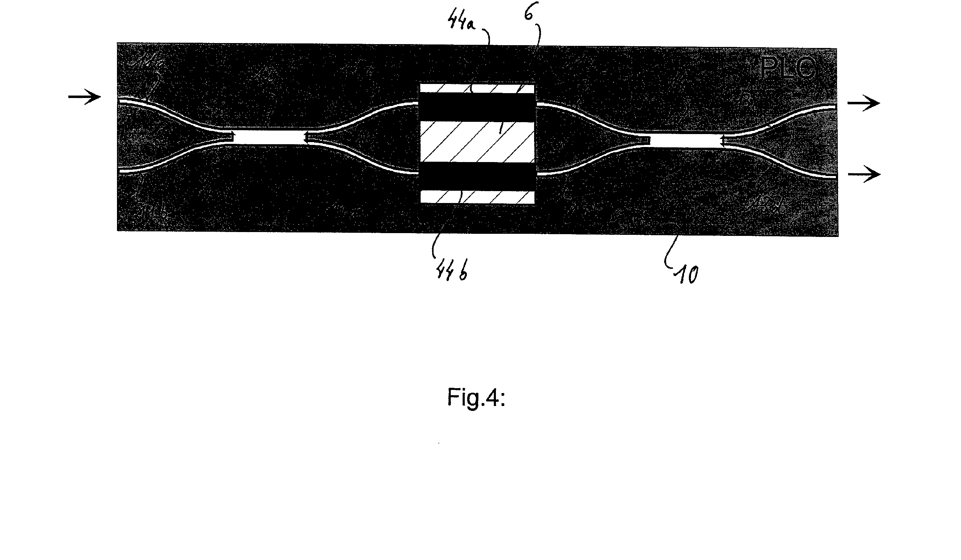

Even a polarisation independent phase modulator can be realized by combining two phase modulators with a half waveplate in between. Because the cladding is removed only at the sections where phase modulation or polarization rotation is required, this concept can take advantage of the low loss and small birefringence waveguides on one hand and on the strong refractive index changes in the LC section on the other hand. The LC phase shifter should be more compact than the thermo-optic phase shifter. An example not restrictive is shown on figure 4.

The PLC platform 10 includes several waveguides, four 11a, 11b, 11c, 11d for a first splitter 12 and four 13a, 13b, 13c, 13d for a second splitter 14. Between these two power splitters 12 and 14 acting e.g. as multi mode interference coupler at 3dB are structured two segments 44a and 44b from the optical waveguide connecting respectively 11c with 13a and 11d with 13b according to the present invention. These two segments 44a and 44b are obtained by etching the cladding 6 surrounding the respective cores of the optical waveguides and then filling them with LC. In such a way, a compact integrated optical switch is realized by the integration of the LC phase shifter in a PLC Mach-Zehnder amplitude modulator with ultra low power consumption.

The integration of ferroelectric kind of liquid crystal i.e. made of twisted nematic liquid crystal molecules, will give the possibility to build even faster modulators (<100µs) than thermooptical ones. And optical devices according to the present invention like LC waveplate are much better adapted for mass production.

## Claims

1. An optical device comprising at least an optical waveguide core structured on a substrate and showing a mode index defined according to the refractive index of its surrounding **characterized in, that** said optical waveguide core is surrounded along a segment at least partly by some liquid crystal material with a refractive index tunable by applying on it some external field.

2. An optical device according to claim 1, **characterized in, that** it comprises some electrode on the vicinity of said liquid crystal material for the generation of said external field as an electrical field.

3. An optical device according to claim 1, **characterized in, that** along said segment said liquid crystal material is only on top of said optical waveguide core, while the other sides of said optical waveguide core being surrounded by another cladding material.

4. An optical device according to claim 1, **characterized in, that** said liquid crystal along said segment shows a liquid crystal director in absence of external field to be parallel to the optical axis of said optical waveguide.

5. An optical device according to claim 4, **characterized in, that** said external field when applied will act on said liquid crystal by tilting its liquid crystal director along a plane parallel to said optical axis.

6. An optical device according to claim 5, **characterized in, that** said segment is used as a phase modulator for optical signals to be transmitted through said optical waveguide.

7. An optical device according to claim 1, **characterized in, that** said liquid crystal along said segment shows a liquid crystal director in absence of external field to be perpendicular to said optical waveguide.

8. An optical device according to claim 7, **characterized in, that** said external field when applied will act on said liquid crystal by tilting its liquid crystal director along a plane perpendicular to said optical axis.

9. An optical device according to claim 8, **characterized in, that** the length of said segment is defined according to the polarization control to be performed with it on an optical signal to be transmitted through said optical waveguide.

10. An optical device according to claim 9, **characterized in, that** said segment is used as a waveplate of specific ratio defined in relation to said optical signal.

11. An optical device according to claim 1, **characterized in, that** said optical waveguide core shows a combination of several segments defined according to claim 6 and 10.

12. An optical device according to claim 11, **characterized in, that** said combination consists of two segments acting as phase modulator with in between a segment acting as a waveplate.

13. An optical device according to claim 12, **characterized in, that** said combination is polarization independent at least for some optical signal to be transmitted through said optical waveguide.

14. An optical device according to claim 1, **characterized in, that** said liquid crystal is made out of some ferroelectric liquid crystal.

15. An optical device according to claim 1, **characterized in, that** said segment is at least part of a phase shifter from an integrated optical circuit.
